# EUROPEAN PATENT APPLICATION

(11) **EP 1 119 135 A2**
(43) Date of publication of application: **25.07.2001**
(21) Application number: 01300219.1
(22) Date of filing: 11.01.2001
(51) Int. Cl.: H04L 12/18

(54) **Apparatus and method for a push service**

(30) Priority: 13.01.2000 US 483174
(71) Applicant: Agilent Technologies, Inc., Palo Alto, CA 94306 (US)
(72) Inventor: Sventek, Joseph S., Edinburgh EH12 5BD (GB); Pollock, Graham S., No. 131 Cupertino, CA 95014 (GB); Holland, Jerremy, Los Altos Hills, CA 94024 (GB)
(74) Representative: Jehan, Robert

(57) **Abstract**

A publish/subscribe system (10) includes a publisher (28), a subscriber (32), and a communication pathway (11). The publisher (28) is operative to generate a message instance (40, 42). The subscriber (32) is operative to receive the message instance (40, 42). The communication pathway (11) extends between the publisher (28) and the subscriber (32), and includes a publish/subscribe mechanism (38) having a message space partitioned into at least one channel (48, 50). Each channel (48, 50) is identified by at least one message type (44, 46), and each channel (48, 50) is operative to identify a particular publish/subscribe message instance (40, 42).

## Description

This invention relates to the delivery of messages between publishers and subscribers, preferably to publish/subscribe mechanisms having an infrastructure based upon message type information that prevents message structure mismatches between publishers and subscribers.

The availability of data distribution technologies has grown in conjunction with the development and adoption of computer network systems, the Internet, and the World Wide Web (WWW). The term "push technology" refers to a data distribution technology wherein selected data is automatically delivered to a client, or user's computer, at prescribed intervals or in response to the occurrence of some event. A computer network comprises the transmission channels that interconnect all the client stations, server stations, and supporting hardware/software within a communications system. The Internet is a large network that is formed by a number of smaller networks. The World Wide Web (WWW) is an Internet facility used to link together documents both locally and remotely. Largely in response to the relatively recent growth of these technologies, demand has grown for systems that can distribute data to a client.

Examples of push technologies are PointCast and Castanet. PointCast is an Internet news system available from PointCast, Inc., of Cupertino, CA (www.pointcast.com). Castanet is a family of Java-based delivery systems for publishing and automatically distributing application updates and other published materials via the Internet and intranets that is available from Marimba, Inc., of Palo Alto, CA (www.marimba.com).

PointCast is a free service that transmits selected news and stock quotes from the Internet to a client computer. PointCast is supported by advertising revenues, and displays information to a user as a screen saver. It is possible for a user that is permanently connected to the Net, or Internet, to request downloads at regular intervals. Additionally, dial-up users can download, or receive a file transmitted over a network, on demand. PointCast software can be downloaded from PointCast's Web site. PointCast was the first popular Internet service capable of pushing selected news and stock quotes into a user's machine at prescribed intervals. Other examples of push technologies similar to PointCast include BackWeb, available from BackWeb Technologies, Inc., of San Jose, CA (www.backweb.com), and Active Channel, available from Microsoft Corporation, of Redmond, WA (www.microsoft.com).

Castanet is a Java-based delivery software available for use with the Internet as well as intranets. Castanet is configured to automatically push application updates and other published content into client computers. Castanet includes Castanet Transmitter and Castanet Tuner. Castanet Transmitter is a server program that manages content streams that are referred to as "Castanet channels". Castanet Tuner is client software that searches for and identifies selected channels. Castanet Tuner is presently built into Netscape Netcaster, available from Netscape Communications Corporation, of Mountain View, CA (www.netscape.com).

Another recent area of growth in data distribution technologies is Publish/Subscribe (PS) systems which provide a source of information to users that they can selectively retrieve. Publish/Subscribe systems use a Publish/Subscribe mechanism to provide a service that can be free or fee-based. Information is typically provided to a user, or client, via e-mail or the World Wide Web (or Web). One example of a Publish/Subscribe system is provided within Macintosh System 7, from Apple Computer, Inc., of Cupertino, CA (www.apple.com), wherein hot links capabilities are provided between files. With the Macintosh System 7 PS system, all or part of a file can be published into an "edition file," which is then imported into a subscriber file. Once any of the published files are updated, the subscriber file is also updated.

Publish/Subscribe (PS) mechanisms have recently become quite popular, particularly since they hold the promise of supporting scalable distributed implementations of near real-time applications. Scalable means that the implementation is capable of being changed in size and configuration, and typically refers to a computer system application's ability to expand. Distributed refers to distributed computing wherein multiple computers are used within an organization or network rather than using one centralized system.

For example, U.S. Patent No. 5,557,798 describes one Publish/Subscribe (PS) mechanism, and is incorporated herein by reference. There exist several key aspects to a PS mechanism. First, publishers are unaware of the identities of other publishers, as well as those of any subscribers. Secondly, subscribers are unaware of the identities of other subscribers, as well as those of any publishers. Finally, the Publish/Subscribe (PS) infrastructure provides particular guarantees that messages sent by a publisher to interested subscribers will be delivered.

Most Publisher/Subscriber (PS) implementations provide a flat name space for partitioning the total space of messages that the PS mechanism will transport. For purposes of this disclosure, each of these partitions will be termed a channel. The names used to identify each channel may be arbitrary (for a simple case), or may denote a particular subject/topic (for a more complex case). A subscriber using the PS mechanism will indicate a particular channel in which they have an interest. A publisher then publishes a message to that particular channel. Pursuant to the semantics of a PS mechanism, each subscriber that has subscribed to a particular channel will receive all messages that have been published to that particular channel since the time when they submitted their subscription request. Implicit in the subscriber's selection of a channel is knowledge of the structure of the messages sent over that channel. In other words, each publisher will only send messages with that particular structure, and each subscriber expects to receive messages corresponding to that structure. Such implementation will hold for both name-based and subject-based PS mechanisms.

A more flexible alternative implementation occurs when the subscription is extended to include specific predicates. The space of messages is structured using a message schema (or entire database) with attributes, and a subscription is a predicate over those attributes. This alternative implementation requires that a specific type structure for these searchable attributes be defined for different messages. There is still an implied structure for the messages, since the attributes are metadata about the messages. This implied structure also introduces a problem in that the attributes may duplicate information in the message, thus leading to excess overhead.

As used herein, metadata is data that describes other data. For example, data dictionaries and repositories form examples of metadata. A meta tag that is used to describe the content of a Web page is referred to as metadata. The term "metadata" may also refer to any file or database that holds information about another database's structure, attributes, processing, or changes.

As described above, there exists an implied relationship between message structure and each channel. Although this relationship can be used functionally, many problems can result. For example, if a rogue publisher starts shipping improper message structures over a particular topic, trusting subscribers within such a Publish/Subscribe architecture could be affected in a variety of ways. The effect could range from having to devote substantial processing cycles getting messages for the correct structure, or generating incorrect data due to misalignment of fields from what was expected, or even crashing due to attempts to access misaligned data. Programming languages long ago did away with the implicit sharing of knowledge as a result of these types of problems by requiring explicit typing for variables and data. Since improper message structures typically can only be detected at runtime, these structures are similar to the runtime exceptions that are fixed by explicit typing in programming languages.

Of course, a message payload could be configured to contain a type descriptor, followed by an instance of the type. Such case would at least prevent a subscriber from attempting to access misaligned data. However, such case would not prevent a rogue publisher from consuming network bandwidth while shipping inappropriate information.

Another problem with current mechanisms is that flat channel space is not capable of capturing relationships between messages over different channels. More particularly, there is a concern when data provided over a particular channel is also legal, or made accessible, for subscribers to another channel. Due to the flat space provided by existing mechanisms, a subscriber would have to be aware of this commonality and decide if they needed to subscribe to both. This presents a real problem for long-lived systems, where the amount of information sent when an event occurs is a non-decreasing function over time. As more is known about how a particular system is going to be used, additional fields will need to be added to the event message. This does not invalidate previous correct uses of the non-extended messages. However, current systems would have to create a new name and/or topic for transporting the extended messages, and all existing subscribers for the non-extended name and/or topic would need to be modified to access the extended name and/or topic.

The present invention seeks to provide an improved publish/subscribe system.

According to an aspect of the present invention there is provided publish/subscribe apparatus as specified in claim 1.

According to another aspect of the present invention there is provided a method of generating and transmitting messages between clients as specified in claim 6.

The preferred embodiment can provide publish/subscribe apparatus and method which can eliminate the constraints imposed by use of flat topic space and the provision of implicit relationships between topic and message structures.

The preferred polymorphic Publish/Subscribe (PS) apparatus and method eliminates use of flat topic space and removes an implicit relationship between topic and message structure. The preferred PS mechanism provides transport of messages of varying types (e.g., structures). A publisher users the infrastructure by indicating the type of message they will pubilsh. A subscriber uses the infrastructure by indicating the type of message in which they are interested. Channels are defined by the names of message types, and these defined channels replace flat topic names.

In another embodiment, the publish/subscribe apparatus includes a publisher, a subscriber, and a communication pathway. The publisher is operative to generate a message instance. The subscriber is operative to receive the message instance. The communication pathway extends between the publisher and the subscriber, and includes a publish/subscribe mechanism having a message space partitioned into at least one channel. Each channel is identified by at least one message type, and each channel is operative to identify a particular publish/subscribe instance.

In one embodiment, the publish/subscribe apparatus includes a publisher client, a subscriber client, and a communication pathway. The publisher client is operative to generate a message instance. The subscriber client is operative to receive the message instance. The communication pathway has a publish/subscribe mechanism including a message space that is partitioned into a first channel and a second channel. The first channel is identified by a message type, and the second channel is identified by a message sub-type. The publish/subscribe mechanism is operative to identify a particular publish/subscribe instance.

In another embodiment, there is provided a method of generating and transmitting messages between clients. The method includes the steps of: providing a publisher, a subscriber, and a communication pathway provided therebetween. The communication pathway has a message type system including a message space operative to produce and process publish/subscribe message instances, identifying at least one message type, subdividing the message space into at least one channel, assigning a message type for each channel, generating a message instance with the publisher, addressing a channel with the assigned message type, and requesting an instance of a message type with the subscriber from the message space, the instance comprising a message having a defined structure.

An embodiment of the present invention is described below, by way of example only, with reference to the accompanying drawings, in which:
Fig. 1 is schematic block diagram illustrating a Publish/Subscribe (PS) mechanism in a publication and subscription system according to one embodiment of the invention realized over a client/server network environment.
Fig. 2 is a schematic block diagram for a single channel within the Publish/Subscribe (PS) mechanism of Fig. 1.
Fig. 3 is a schematic block diagram for a polymorphic type Publish/Subscribe (PS) mechanism of Fig. 1 showing the logical structure for sub-type related channels.

The described embodiments of apparatus and method allow for publishing and subscribing
to message-type information in a manner that prevents message structure mismatches between publishers and subscribers. A new publish/subscribe mechanism is utilized having an infrastructure that uses type-based addressing. According to one implementation, sub-type based addressing is also utilized. Accordingly, the need to use flat topic space is eliminated, and the implicit relationship between topic and message structure is removed.

Reference will now be made to a preferred embodiment, depicted with reference to the drawings, comprising a polymorphic Publish/Subscribe mechanism that, in one embodiment, is implemented over a network.

In an effort to prevent obscuring the invention at hand, only details germane to implementing the invention will be described in detail, with presently understood peripheral details being incorporated by reference, as needed, as being presently understood in the art.

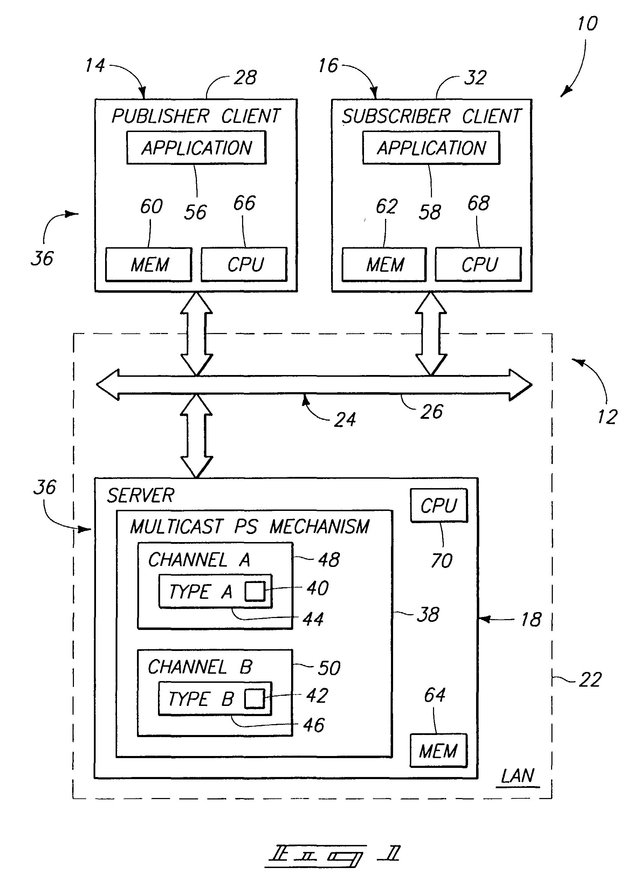

Figure 1 illustrates a polymorphic publish/subscribe (PS) apparatus identified generally by reference numeral 10. According to one construction, apparatus 10 is implemented over a communication pathway 11 within a client/server network environment 12 which includes clients 14, 16 and server 18. A client/server network environment 12 includes communication pathway 11, which in one form includes a network 22. Also, according to one construction, network 22 is a local area network. Additionally, or optionally, such local area network 22 is provided within the Internet 24. Accordingly, network 22 can also include the Internet 24. According to an even further construction, Internet 24 is the World Wide Web (WWW) 26.

As shown in Figure 1, client 14 comprises a publisher computer (or publisher) 28, and client 16 comprises a subscriber computer (or subscriber) 32. Infrastructure 36 is provided by network 22 and computers 14 and 16. As utilized herein, "publisher" refers to any general-purpose machine capable of processing data by way of a set of instructions which enables a user to provide a source of information that users, or subscribers, can selectively retrieve by way of a communication pathway. Similarly, as utilized herein, "subscriber" refers to a general-purpose machine that processes data according to a set of instructions and which enables a user to selectively retrieve such source of information by way of a communication pathway. Also as utilized herein, "client" refers to a workstation or personal computer provided within a client/server environment.

According to Figure 1, publish/subscribe (PS) apparatus 10 is shown implemented within a client/server network environment. As shown in Figure 1, apparatus 10 is implemented over communication pathway 11, wherein communication pathway 11 includes network 22. However, it is understood that communication pathway 11 can be realized by other specific forms of communication pathways.

According to one alternative implementation, apparatus 10 is implemented on a single computer, instead of being implemented across a local area network. Accordingly, a physical network is not necessarily required pursuant to this alternative implementation. By implementing apparatus 10 within a single computer, no physical network connection is necessarily required. Accordingly, apparatus 10 can be implemented in a single computer without having any physical network connection. According to such alternative implementation, publisher 28, subscriber 32, computer 18, and communication pathway 11 are all provided on a single, common computer. According to such implementation, local loop-back is supported by the computer where there is no physical network.

More particularly, such alternative implementation provides publisher 28, subscriber 32, and communication pathway 11 within a single, common computer such that a publish/subscribe infrastructure is provided on a single machine having processing capabilities that hosts a publisher and a subscriber.

Accordingly, publisher 28, subscriber 32, infrastructure 36, and communication pathway 11 can be provided via processing circuitry in communication links on one or more computers, such as client computers 14 and 16, and server computer 18. Accordingly, the publish/subscribe apparatus 10 can be provided on a single, common machine, on a plurality of machines, and even on machines that are different from machines that are hosting a publisher or a subscriber. Accordingly, a publish/subscribe mechanism 38 of PS apparatus 10 can be provided on a first machine, while one or more publishers 28 and/or subscribers 32 are provided on one or more additional, different machines. As depicted in Figure 1, the publish/subscribe mechanism of PS apparatus 10 is distributed amongst computers 14, 16 and 18, but other implementations are understood to fall within the scope of the appended claims.

As utilized herein, publish/subscribe (PS) apparatus 10 includes a publish/subscribe (PS) infrastructure 36 that includes communication pathway 11. According to one implementation, such communication pathway 11 is provided at least in part by network 22. Such network 22 can be a local area network or the Internet. As utilized herein, communication pathway 11 refers to a fabric, such as a communication fabric or publish/subscribe (PS) fabric which refers to the physical entity that includes a multicast mechanism, channels, and physical medium for transporting information across communication pathway 11, or network 22. Accordingly, such PS fabric can be provided on one or more machines that host a publisher 28 or a subscriber 32, on communication pathway 11, or on server computer 18.

Even further optionally, communication pathway 11 comprises any medium capable of implementing electronic transfer of information from one location to another. For example, a bus provides one form of a communication pathway comprising a common pathway, or channel, formed between multiple devices. Such a bus can be an internal bus within a single, common computer, or a network bus, such as a common cable connecting stations together within a network. For example, clients and service can be coupled together with a network bus. Even further constructions are envisioned for communication pathway 11 wherein a plurality of devices having processing circuitry, such as individual computer systems, are communicating together, and a publish/subscribe mechanism is provided within the processing circuitry provided within one or more of such devices.

Two important prior art concepts have been eliminated from the preferred embodiment of apparatus 10. First, apparatus 10 eliminates the use of flat topic space. Secondly, apparatus 10 removes any implicit relationship between topic and message structure.

Pursuant to this, a PS mechanism 38 provides the ability to transport messages 40, 42 of varying message types (*e*.*g*., structures) 44 and 46. A publisher 28 utilizes infrastructure 36 by indicating the particular type 44, 46 of message 40, 42 that publisher 28 will publish. Similarly, a subscriber 32 would utilize infrastructure 36 in order to subscribe to, or designate an interest in receiving, a particular type of message 40, 42. Channels 48 and 50 are defined by the names of message types, thereby replacing usage of prior art flat topic names.

As depicted in Figure 1, message types 44 and 46 are shown independent of one another. However, it is understood that message types 46 and 48 can take one of two forms. For example, a first form envisions message types 44 and 46 as being "unrelated message types" which create separate, distinct, unrelated message channels 48 and 50. According to an alternative implementation, message types 44 and 46 form "related message types" comprising a message super-type and a message sub-type.

For the case where message types are of an unrelated type, unrelated message types are provided by type 44 and type 46 being totally independent of one another, which bifurcates the network into two channels.

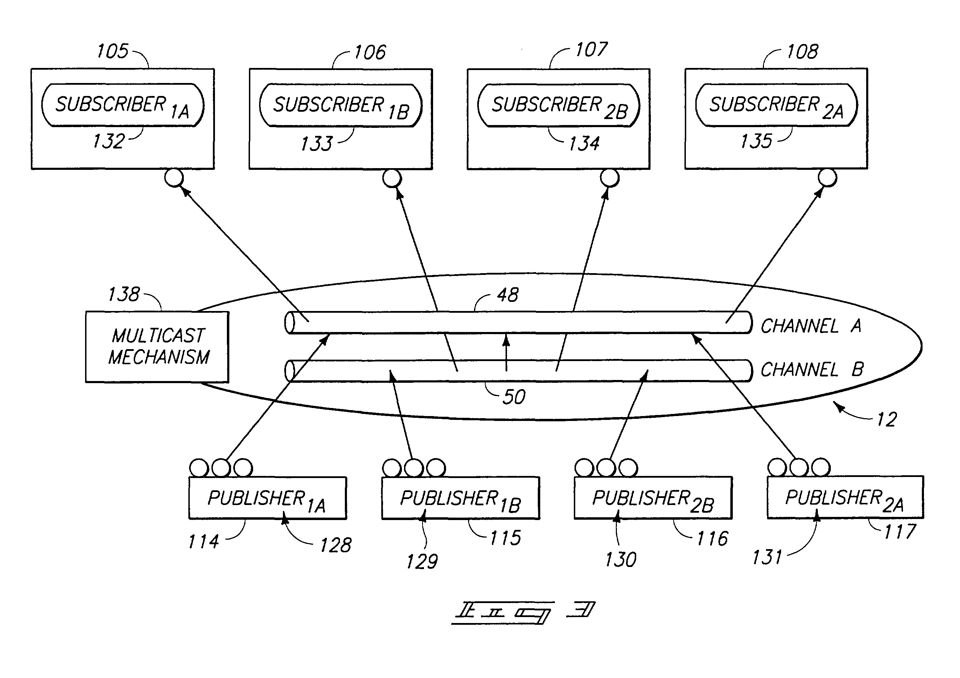

For the case where message type are related, a sub-type relationship is formed. One implementation of "related message types" is shown in greater detail with reference to Figure 3. Such related message types use message sub-types which allow for the creation of two message channels. For example, message type 44 can be provided as a message super-type, while message type 46 is a message sub-type. In such case, two message channels are created, channels 48 and 50, where channel 48 is associated with message super-type 44 which can include all the traffic that flows across channel 48 that is associated with sub-type 46. Accordingly, where channels 48 and 50 are related, the messages that flow across the sub-type channel 50 represent a subsection of the messages that flow across the super-type channel 48.

For the above example of related sub-type systems, a sub-type channel defines a channel that is a subset of a super-type channel. For example, for a temperature reporting multicast system, the channel of all subscribers that register for temperature updates might include a channel for subscribers that register for "liquid temperature" updates. One might expect to see only "liquid temperature" type objects going across a multicast channel for message types "liquid temperature", while one might see objects of both temperature and "liquid temperature" going across a multicast channel of type temperature, because "liquid temperature" is a sub-type of temperature.

According to one aspect, message types 44 and 46 can be related. Such relationship is referred to as a sub-type relationship. For example, structure "TYPE A" 44 and structure "TYPE B" 46 can form a type/sub-type relationship. For this case, structure "TYPE A" 44 becomes a type (or super-type) **A,** whereas structure "TYPE B" 46 becomes a sub-type **B**. According to such example, a sub-type **B** can be derived from a type **A** through two possible actions. First, additional fields can be added to those of type A. Secondly, legal values of one or more of the fields of A can be further constrained by **B.** For example, an integer field of **A** might be restricted to values in the range of **1-100** in instances of **B.**

For the case where **B** is a sub-type of **A, A** is also referred to as a super-type of **B.** More particularly, **B** is denoted as being a sub-type of **A** using the following notation: **B→A.** Additionally, the equivalent super-type relationship is denoted as **A←B.**

For example, suppose that instances of type **A** consist of a single field named "Name" which is of type *string.* We could create two sub-types, named **B1** and **B2,** in the following ways. First, **B1** extends **A** by adding a *string* field named "Date". Secondly, **B2** constrains **A** by requiring that the value of field "Name" start with the letter "A".

The sub-type relationship described above defines a notion of "substitutability". That is, an instance of type **B** is substitutable for an instance of type **A** if and only if **B** is a sub-type of **A**. Therefore, a subscriber that expects to receive an instance of type **A** will be able to process an instance of type **B**.

By forcing publishers 28 and subscribers 32 to use a publish/subscribe infrastructure 36 that is based upon a message-type system, the possibility of either the publisher 28 or subscriber 32 producing or processing a message of the wrong structure is removed. Therefore, message-type names are used to partition the message space into channels for a particular PS instance.

Having a message type system that supports sub-types permits producers to generate sub-type instances and subscribers to process them as super-type instances. Such a sub-type system forms a polymorphic-type system. For example, according to one implementation of PS mechanism 38 in Figure 1, channel 50 is a sub-type channel and channel 48 is a super-type channel, thereby providing a polymorphic type system. Within the scope of a particular PS instance, this system forces the coupling of a sub-type channel 50 into a super-type channel 48. That is, if a message is sent over the sub-type channel and subscribers exist for the super-type channel, the message is converted to an instance of the super-type channel and is received by subscribers to the super-type channel. This conversion and receipt is carried out without any explicit additional actions being carried out by the publishers or subscribers.

As described above, by forcing publishers and subscribers to use an infrastructure that is based upon message type information to define channels, message structure mismatches are prevented from occurring between publishers and subscribers.

Through the use of a polymorphic message type system, scope is provided for evolution of applications using a PS mechanism without requiring that existing publisher and/or subscriber applications be modified. Sub-types can be created for particularly extended or constrained messages, thereby permitting subscribers that are knowledgeable of a particular sub-type to tap into that particular channel. Other subscribers that are interested in the super-type will continue to receive all instances of the super-type, including instances of the sub-type (converted to an instance of the super-type), due to the coupling of sub-type and super-type channels provided by the described PS mechanism. Publishers of the particular super-type do not have to be modified in order for new publishers to publish instances of the super-types.

Although the above discussion has focused on near real-time delivery of messages to subscribers based on a polymorphic message type system, it is understood that the coupling of channels based upon type polymorphism is also applicable to store-and-forward event notification systems. The only difference is in terms of implementation of the abstraction, not in related functionality.

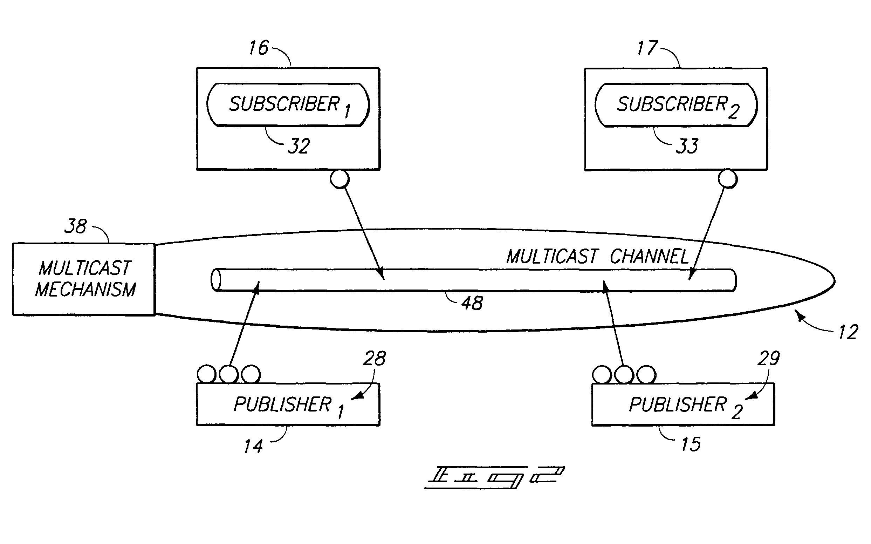

Figure 2 illustrates a single channel implementation of the publish/subscribe mechanism of Figure 1. Each message sent by either publisher will be received by each subscriber. More particularly, according to one implementation, PS mechanism 38 is a multicast PS mechanism that is implemented over network 12 so as to have a multicast channel 48. A plurality of client computers 14-17 are coupled in communication with network 12 via channel 48. Client computers 14 and 15 comprise publishers 28 and 29, respectively. Client computers 16 and 17 comprise subscribers 32 and 33, respectively.

According to the implementation depicted in Figure 2, a message can be sent by publisher 28 via channel 48 in a manner which can be received by both of subscribers 32 and 33. Likewise, a message can be sent by publisher 29 to both of subscribers 32 and 33.

Figure 3 illustrates a multiple channel implementation of the publish subscribe mechanism of Figure 1 having related message types. A plurality of client computers 105-108 and 114-117 are coupled with a multicast mechanism 138 via network 12. More particularly, multicast mechanism 138 includes channel 48, identified by "channel A", and sub-type channel 50, identified by "channel B". Accordingly, channels 48 and 50 take on a related message-type structure in the implementation depicted in Figure 3.

As shown in Figure 3, client computers 114-117 each comprise publishers 128-131, respectively. Similarly, client computers 105-108 each comprise subscribers 132-135, respectively. However, multicast mechanism 138 differs over mechanism 38 (of Fig. 2) in that a particular instance of a related message type is shown using channels and sub-channels. More particularly, "channel B" forms a sub-type channel 50 of "channel A", identified as channel 48.

A logical structure is shown for sub-type related channels where **B** is a sub-type channel of **A, B → A.** The arrow between channels **B** and **A** indicates that each message published over **B** is converted to an instance of **A'**s message type and published on **A.**

In order to implement the multicast mechanism 138 of Figure 3, it is necessary to define a declaration of message types. Following is one exemplary declaration of message types suitable for use with the multicast mechanism 138 of Figure 3.

### Exemplary Declaration of Message Types

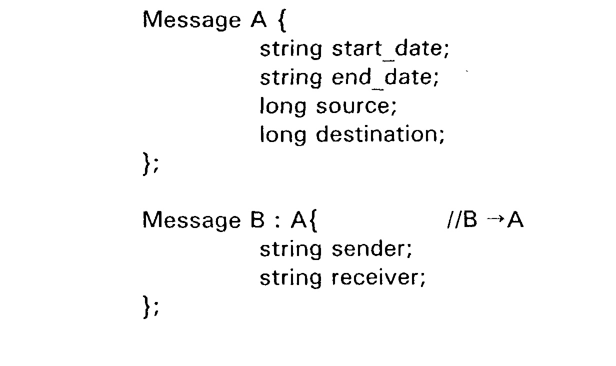

The preferred embodiments have been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

The disclosures in United States patent application No. 09/483,174, from which this application claims priority, and in the abstract accompanying this application are incorporated herein by reference.

## Claims

1. Publish/subscribe apparatus (10), including:
a publisher (28) operable to generate a message instance (40, 42);
a subscriber (32) operable to receive the message instance (40, 42); and
a communication pathway (11) extending between the publisher (28) and the subscriber (32), the communication pathway (11) including a publish/subscribe mechanism (38) having a message space partitioned into at least one channel (48, 50), each channel (48, 50) identified by at least one message type (44, 46) and operable to identify a particular publish/subscribe message instance (40, 42).

2. Publish/subscribe apparatus (10) as in claim 1, wherein the message space of the publish/subscribe mechanism (38) is partitioned into a plurality of channels (48, 50).

3. Publish/subscribe apparatus (10) as in claim 2, wherein a first channel (48) is identified by a message type (44) and a second channel (50) is identified by a message sub-type (46), and wherein the message sub-type (46) is derived from the message type (44).

4. Publish/subscribe apparatus (10) as in claim 1, 2 or 3, wherein the communication pathway (11) comprises a local area network (22) having a multicast publish/subscribe (PS) mechanism (38), wherein the multi-cast publish/subscribe (PS) mechanism (38) includes the at least one channel (48, 50), and wherein each channel (48, 50) includes one of the at least message types (44, 46).

5. Publish/subscribe apparatus (10) as in claim 1, 2 or 3, wherein the communication pathway (11) comprises a network server (18) having a central processing unit (70) and memory (64), the central processing unit (70) being operable to implement the publish/subscribe mechanism (38), and the memory (64) operable to store the message instance (40, 42).

6. A method of generating and transmitting messages between clients (14, 16), including the steps of:
providing a publisher (28), a subscriber (32) and a communication pathway (11) provided therebetween, wherein the communication pathway (11) includes a message type system including a message space operative to produce and process publish/subscribe message instances (40, 42);
identifying at least one message type (44, 46);
subdividing the message space into at least one channel (48, 50);
assigning a message type (44, 46) for each channel (48, 50);
generating a message instance (40, 42) with the publisher (28);
addressing a channel (48, 50) with the assigned message type (44, 46); and
requesting a message instance (40, 42) of the message type (44, 46) with the subscriber (32) from the message space, the message instance (40, 42) comprising a message having a defined structure.

7. A method as in claim 6, including identifying at least one message sub-type (46).

8. A method as in claim 7, wherein the message type (44) and the message sub-type (46) cooperate to provide a polymorphic message type system.

9. A method as in claim 6, 7 or 8, wherein the communication pathway (11) is a store-and-forward event notification system provided on a network (22).

10. A method as in claim 6, 7, 8 or 9, wherein the publisher (28) generates a message type instance (40) and a message sub-type instance (42).
